# EUROPÄISCHE PATENTANMELDUNG

(11) **EP 1 431 129 A1**
(43) Veröffentlichungstag der Anmeldung: **23.06.2004**
(21) Anmeldenummer: 03015727.5
(22) Anmeldetag: 10.07.2003
(51) Int. Cl.: B60R 16/04, H02J 7/14

(54) **Vorrichtung zur Erkennung einer Fremdenergieversorgung eines Fahrzeugs**

(30) Priorität: 19.12.2002 DE 10259548
(71) Anmelder: ROBERT BOSCH GMBH, 70442 Stuttgart (DE)
(72) Erfinder: Luz, Oliver, 73669 Lichtenwald (DE); Rieger, Reinhard, 74336 Brackenheim (DE); Fink, Holger, 70565 Stuttgart (DE)

(57) **Zusammenfassung**

Die Erfindung betrifft eine Vorrichtung zur Erkennung einer Fremdenergieversorgung eines Fahrzeugs. Diese weist eine an einen der Pole der Fahrzeugbatterie (1) angeschlossene Stromsensorik (5) auf, die zur Erfassung des Batteriestroms (i1) vorgesehen ist. Weiterhin ist ein Fremdenergieversorgungsanschluss (6) vorgesehen, bei dem es sich nicht um den Pluspol (3) und nicht um den Minuspol (4) der Batterie (1) handelt. Die Stromsensorik (5) ist im Signalweg zwischen dem Fremdenergieversorgungsanschluss (6) und demjenigen Pol (3) der Fahrzeugbatterie angeordnet, an welchen die Stromsensorik (5) angeschlossen ist. Weiterhin enthält die Vorrichtung Mittel (11), die denjenigen Pol (3) der Fahrzeugbatterie (1), an welchen die Stromsensorik (5) angeschlossen ist, für eine Fremdenergieversorgung des Fahrzeugs unzugänglich machen.

## Beschreibung

Die vorliegende Erfindung betrifft eine Vorrichtung zur Erkennung einer Fremdenergieversorgung eines Fahrzeugs, insbesondere einer Fremdstarterkennung oder einer Fremdladeerkennung.

### Stand der Technik

In Fahrzeugen werden zunehmend sicherheitsrelevante Funktionen ausschließlich elektrisch betrieben. Als Beispiel wird die elektrische Bremse genannt. Um sicher zu stellen, dass die Funktionsfähigkeit derartiger Komponenten bzw. Systeme ständig gewährleistet ist, müssen diese ununterbrochen mit elektrischer Energie versorgt werden. Es ist bekannt, hierzu in einem Fahrzeug zwei Energiequellen, nämlich eine Batterie und einen Generator, vorzusehen.

Da die Lebensdauer einer konventionellen Blei-Säure-Batterie im Regelfall geringer ist als die Lebensdauer eines Fahrzeugs, kommt es regelmäßig vor, dass nur noch eine der beiden genannten Energiequellen funktionsfähig ist. In den meisten Fällen wird dabei der Generator langlebiger sein als die Batterie.

Ein Verfahren zur Überwachung des Funktionszustandes einer Batterie durch Auswertung von deren Batteriespannung ist aus der DE 195 17 709 C1 bekannt. Abhängig vom Ergebnis der Überwachung bzw. den dabei ermittelten Daten wird dort insbesondere entschieden, ob eine an die Batterie angeschlossene Maschine für einen weiteren Arbeitsgang freigegeben wird oder nicht.

Kommt es bei einer leeren oder defekten Batterie auch zu einem Schaden oder einer Überlastung des Generators, dann ist die Versorgung der Verbraucher nicht mehr sichergestellt, und das Fahrzeug kann in einen sicherheitskritischen Zustand gelangen. Eine Überlastung des Generators kann dann auftreten, wenn mehr Verbraucher zugeschaltet sind als der Generator nominell versorgen kann. Aus diesem Grund sind Notmaßnahmen vorzusehen, die auf der einen Seite den Fahrer warnen, auf der anderen Seite aber auch das Bordnetz möglichst lange in einem betriebssicheren Zustand halten. Letzteres kann dadurch erreicht werden, dass nur noch wenige Verbraucher ein- bzw. zugeschaltet bleiben.

Bei einer leeren oder defekten Batterie ist das Fahrzeug überdies nicht mehr startfähig, so dass die Startfähigkeit an sich als Kriterium für den Zustand der Energiequelle Batterie angesehen werden kann. Häufig wird in diesen Fällen jedoch mit einem zweiten Fahrzeug Starthilfe geleistet und dadurch eine intakte Batterie vorgetäuscht. Dabei werden die vorerwähnten Sicherheitsmaßnahmen nicht durchgeführt und die Warnung bzw. die Stabilisierungsmaßnahmen greifen nicht. Aus diesem Grund muss eine Erkennung eines Fremdstarts erfolgen.

Die Fremdstarterkennung dient dazu, einen Fahrzeugstart festzustellen, der mit Hilfe einer externen zusätzlichen Energiequelle zustande kommt. Die Fremdstarterkennung ist erforderlich für die Realisierung einer Batteriezustandserkennung. Ein wesentlicher Bestandteil bekannter Verfahren zur Batteriezustandserkennung ist eine Bestimmung des Batterie-Innenwiderstandes beim Fahrzeugstart. Aussagen zum Batterie-Innenwiderstand sind dabei nur bei einem gelungenen Start ohne fremde Hilfe gültig.

Zur Erkennung eines Fremdstarts ist es bekannt, die Batteriespannung zu bestimmten Zeitpunkten zu erfassen und immer den letzten Wert, falls plausibel, als U_{Last} zu speichern. Ist die Batteriespannung Uᵢₙᵢₜ kurz vor einem Start bei etwa gleichem Laststrom nun eindeutig höher als U_{Last}, dann wurde entweder die Batterie zuvor durch ein Ladegerät geladen, oder es ist eine zusätzliche Spannungsquelle zur Starthilfe angeklemmt. Gelingt anschließend der Start, dann wird Fremdstart detektiert.

Es ist ferner möglich, bei jedem Fahrzeugstart eine Bestimmung des Innenwiderstandes der Batterie durchzuführen. Bei nicht gelungenen Startversuchen wird ein Startzähler hochgezählt, der nach dem nächsten gelungenen Start zurückgesetzt wird. Eine scheinbare Verringerung des Batterie-Innenwiderstandes nach einem oder mehreren missglückten Startversuchen deutet auf eine parallel angeklemmte Batterie hin. Dieser Fall wird damit ebenfalls als Fremdstart interpretiert.

Aus der DE 100 11 404 A1 ist eine Einrichtung zur Erkennung einer Fremdenergieversorgung eines Fahrzeugs, insbesondere eines Fremdstarts eines Kraftfahrzeugs, das ein elektrisches Bordnetz mit einer Batterie zur Bereitstellung einer Bordnetzspannung aufweist, bekannt. Die bekannte Einrichtung weist eine zwischen der Batterie und dem Bordnetz angeordnete Überwachungseinheit auf, die mittels wenigstens eines Sensors die Bordnetzspannung erfasst.

In der DE 102 09 136.6 ist eine Vorrichtung zur Erkennung einer Fremdenergieversorgung eines Fahrzeugs beschrieben, welche Mittel zur Bereitstellung eines den Innenwiderstand einer Batterie des Fahrzeugs darstellenden ersten Signals während eines Startvorgangs und während eines sich hieran gegebenenfalls anschließenden Betriebes des Fahrzeugs sowie zur Auswertung des ersten Signals zum Zwecke der Erkennung einer Fremdenergieversorgung des Fahrzeugs, und/oder Mittel zur Bereitstellung eines die Motordrehzahl während des Startvorgangs darstellenden zweiten Signals sowie zur Auswertung des zweiten Signals zum Zwecke der Erkennung einer Fremdenergieversorgung des Fahrzeugs aufweist.

In heutigen Fahrzeugen sind die Pole der Fahrzeugbatterie zugänglich. Eine Fremdstarthilfe wird in der Regel dadurch gegeben, dass die Pole der zu stützenden Fahrzeugbatterie über ein Starthilfekabel mit den entsprechenden Polen der die Starthilfe gebenden Batterie verbunden werden. Zu diesem Zweck sind die Enden der Starthilfekabel jeweils mit einer Klemmeinheit versehen, welche mit dem jeweiligen Pol der Batterie verbunden wird.

Da die Pole der Fahrzeugbatterie zugänglich sind, wird von einer Stromsensorik, die zwischen einem der Pole der zu stützenden Batterie und dem Bordnetz angeordnet ist, im Falle eines Fremdstarts nur derjenige Anteil des Fremdstartstroms erfasst, der in das an die Fahrzeugbatterie angeschlossene Bordnetz des Fahrzeugs fließt. Der Anteil des Fremdstartstromes, der in die zu stützende Fahrzeugbatterie fließt, wird nicht erfasst. Dies hat den Nachteil, dass bei der SOC-Bestimmung (State of Charge) und der SOH-Bestimmung (State of Health) der Batterie der in die Batterie fließende Anteil des Fremdstartstroms nicht erfasst wird. Dies führt zu fehlerhaften Ergebnissen bei der Batteriestrommessung.

Des Weiteren wird das Ereignis "Fremdstarthilfe erhalten" in Fällen, bei denen der Algorithmus der Erkennung auf einer Messung des Batteriestroms basiert, nicht erkannt. Dies ist insbesondere von Nachteil für Fahrzeuge, die über ein Batterie- bzw. Energiemanagement verfügen.

### Vorteile der Erfindung

Eine Vorrichtung mit den im Anspruch 1 angegebenen Merkmalen weist den Vorteil auf, dass sichergestellt ist, dass die vorhandene Stromsensorik den Batteriestrom vollständig erfasst, so dass der gemessene Batteriestromwert korrekt bei der Detektion des Ereignisses "Fremdstarthilfe erhalten" berücksichtigt werden kann. Dies ermöglicht es auch, den SOC und den SOH der Fahrzeugbatterie bei all den Anwendungen, bei denen die Bestimmung des SOC und des SOH auf einer Messung des Batteriestroms beruht, korrekt zu ermitteln. Wesentlich dabei ist, dass der Batteriepol der Fahrzeugbatterie, auf dessen Seite sich die Stromsensorik zur Erfassung des Batteriestroms befindet, unzugänglich ist, so dass für den Benutzer keine Möglichkeit besteht, die Klemme eines Starthilfekabels direkt an diesen Pol der Fahrzeugbatterie anzuschließen.

Dies ist insbesondere bei Fahrzeugen, die eine Elektronik mit der Funktionalität eines Batterie- bzw. Energiemanagements aufweisen, beispielsweise das von der Anmelderin vertriebene EBM-Steuergerät, vorteilhaft. Gemäß der Erfindung wird zum Geben und Nehmen von Fremdstart - bzw. Fremdladehilfe ein definierter Fremdenergieversorgungsanschluss zur Verfügung gestellt und der zugehörige Pol der Batterie unzugänglich gemacht. Wichtig ist lediglich, dass der genannte Fremdenergieversorgungsanschluss so angeordnet ist, dass der Batteriestrom sowohl beim Geben als auch beim Nehmen von Starthilfe von der Stromsensorik erfasst wird.

Vorzugsweise ist der genannte Fremdenergieversorgungsanschluss an bzw. in einer Vorsicherungsbox oder einer Box, in der sich zusätzliche Elektronik befindet, angebracht.

### Zeichnung

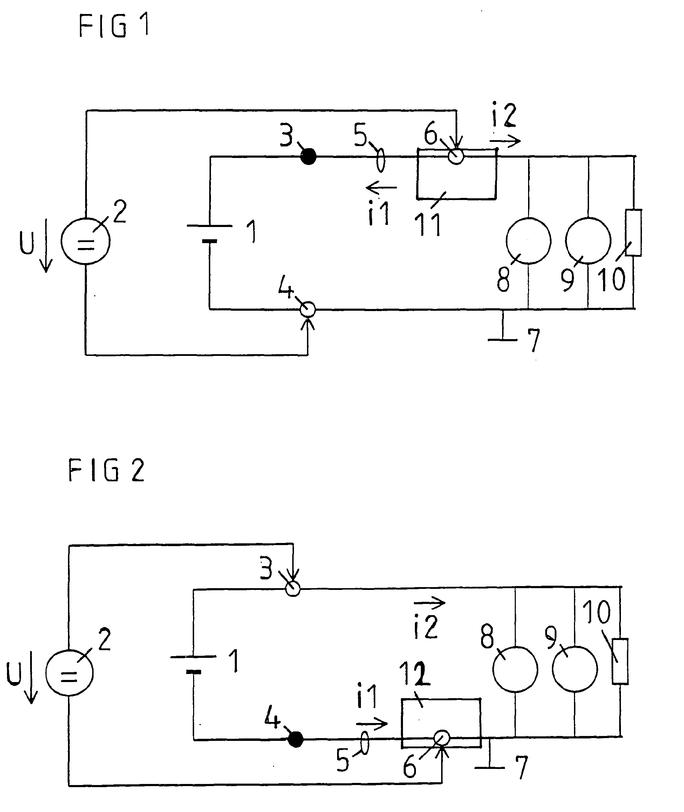

Nachfolgend werden Ausführungsbeispiele für die Erfindung anhand der Zeichnungen erläutert. Die Figur 1 zeigt ein Blockschaltbild eines ersten Ausführungsbeispiels für die Erfindung und die Figur 2 ein Blockschaltbild eines zweiten Ausführungsbeispiels.

### Beschreibung

Die Figur 1 zeigt ein erstes Ausführungsbeispiel für die Erfindung. Gemäß diesem Ausführungsbeispiel weist eine Fahrzeugbatterie 1 einen Pluspol 3 und einen Minuspol 4 auf. Der Minuspol 4 ist mit Fahrzeugmasse 7 verbunden. An den Pluspol 3 ist eine Stromsensorik 5 angeschlossen, die zur Messung des Batteriestroms i1 vorgesehen ist.

Die gezeigte Vorrichtung weist weiterhin einen Fremdenergieversorgungsanschluss 6 auf. Dieser ist zwischen der Stromsensorik 5 und einem Anschluss der Bordnetz-Verbraucher 10 angeordnet. Der andere Anschluss der Bordnetz-Verbraucher 10 ist mit Fahrzeugmasse 7 verbunden. Parallel zu den Bordnetz-Verbrauchern 10 ist ein Starter 8 und ein Generator 9 geschaltet.

Der Fremdenergieversorgungsanschluss 6 ist beim gezeigten Ausführungsbeispiel in bzw. an einer Vorsicherungsbox 11 angeordnet. Diese Vorsicherungsbox dient zur batterienahen Energieverteilung und einer Absicherung von Leitungen und Verbrauchern im Fahrzeug-Bordnetz. Als Komponenten beinhaltet diese Vorsicherungsbox schraub- oder steckbare Schmelzsicherungen. Sie enthält weiterhin elektronische Komponenten, beispielsweise eine Elektronik mit Funktionen zur Batteriezustandserkennung und zum Energiemanagement sowie dazu benötigte Sensoren. Der Fremdenergieversorgungsanschluss 6 ist derart positioniert, dass der Batteriestrom i1 sowohl bei einem Geben von Starthilfe als auch bei einem Nehmen von Starthilfe komplett von der Stromsensorik 5 erfasst wird. Beim gezeigten Ausführungsbeispiel befindet sich die Stromsensorik 5 zwischen dem Pluspol 3 der Batterie 1 und dem Fremdenergieversorgungsanschluss 6 bzw. der Vorsicherungsbox 11, welche den Fremdenergieversorgungsanschluss 6 enthält.

Die Fremdenergie wird von einer externen Starthilfebatterie 2 zur Verfügung gestellt, bei der es sich beispielsweise um die Fahrzeugbatterie eines weiteren Fahrzeugs handelt. Der Pluspol der Fahrzeugbatterie 2 des weiteren Fahrzeugs ist mit dem Fremdenergieversorgungsanschluss 6 des die Starthilfe benötigenden Fahrzeugs verbunden, der Minuspol mit dem Minuspol 4 des die Starthilfe benötigenden Fahrzeugs.

Der von der externen Starthilfebatterie 2 gelieferte Fremdstartstrom wird im Fremdenergieversorgungsanschluss 6 in zwei Komponenten aufgeteilt. Eine dieser Komponenten ist der bereits genannte Batteriestrom i1. Die andere Komponente ist der in das Bordnetz fließende Bordnetzstrom i2.

Der Pluspol 3 des die Starthilfe benötigenden Fahrzeugs ist bei dem in der Figur 1 gezeigten Ausführungsbeispiel für eine Fremdenergieversorgung unzugänglich. Dies ist beispielsweise dadurch sichergestellt, dass eine vom Kunden nicht ohne weiteres zu öffnende bzw. abzunehmende Abdeckung 13 auf dem Pluspol 3 angebracht ist, beispielsweise eine Kunststoffkappe. Alternativ dazu kann die Unzugänglichkeit des Pluspols 3 auch dadurch erreicht werden, dass der Einbau der Batterie 1 in das Fahrzeug derart vorgenommen wird, dass der Pluspol 3 für den Kunden unzugänglich ist und dieser folglich nicht die Möglichkeit hat, eine Klemme eines Starthilfekabels am Pluspol 3 der Batterie 1 zu befestigen.

Wäre es für den Kunden möglich, dem Fahrzeug Starthilfe über den Pluspol 3 zu geben, dann würde ein Teil des von der Starthilfebatterie 2 gelieferten Fremdstartstromes in die Batterie 1 und der andere Teil in das Bordnetz fließen. Dabei würde der in die Batterie 1 fließende Teil nicht von der Stromsensorik 5 erfasst.

Dieser unerwünschte Zustand wird gemäß der vorliegenden Erfindung dadurch vermieden, dass zum Geben und Nehmen von Fremdstart- oder auch Fremdladehilfe ein definierter Zugang in Form eines Fremdenergieversorgungsanschlusses 6 zur Verfügung gestellt wird, bei dem es sich nicht um einen der Pole der die Hilfe benötigenden Batterie 1 handelt. Dieser Fremdenergieversorgungsanschluss 6 ist derart angeordnet, dass der vom Fremdenergieversorgungsanschluss 6 in die Batterie 1 fließende Strom von der Stromsensorik 5 erfasst wird. Weiterhin wird der Pluspol 3 der Batterie 1 unzugänglich gemacht, um sicherzustellen, dass der Kunde nicht trotz des Vorhandenseins des Fremdenergieversorgungsanschlusses 6 den Pluspol 3 zur Fremdenergieversorgung benutzt.

Die Figur 2 zeigt ein zweites Ausführungsbeispiel für die Erfindung. Gemäß diesem zweiten Ausführungsbeispiel weist eine Fahrzeugbatterie 1 einen Pluspol 3 und einen Minuspol 4 auf. Der Pluspol 3 ist mit einem Anschluss der Bordnetzverbraucher 10 verbunden. An den Minuspol 4 ist eine Stromsensorik 5 angeschlossen, die zur Messung des Batteriestroms il vorgesehen ist.

Die gezeigte Vorrichtung weist weiterhin einen Fremdenergieversorgungsanschluss 6 auf. Dieser ist zwischen der Stromsensorik 5 und Fahrzeugmasse 7 angeordnet. Mit der Fahrzeugmasse 7 ist auch der andere Anschluss der Bordnetzverbraucher 10 verbunden. Parallel zu den Bordnetzverbrauchern 10 ist ein Starter 8 und ein Generator 9 geschaltet.

Der Fremdenergieversorgungsanschluss 6 ist beim gezeigten Ausführungsbeispiel in bzw. an einer Box 12 angeordnet. Diese Box beinhaltet elektronische Komponenten, beispielsweise eine Elektronik mit Funktionen zur Batteriezustandserkennung und zum Energiemanagement sowie dazu benötigte Sensoren. Der Fremdenergieversorgungsanschluss 6 ist derart positioniert, dass der Batteriestrom i1 sowohl bei einem Geben von Starthilfe als auch bei einem Nehmen von Starthilfe komplett von der Stromsensorik 5 erfasst wird. Beim gezeigten Ausführungsbeispiel findet sich die Stromsensorik 5 zwischen dem Minuspol 4 der Batterie 1 und dem Fremdenergieversorgungsanschluss 6 bzw. der Box 12, die den Fremdenergieversorgungsanschluss 6 enthält.

Die Fremdenergie wird von einer externen Starthilfebatterie 2 zur Verfügung gestellt, bei der es sich beispielsweise um die Fahrzeugbatterie eines weiteren Fahrzeugs handelt. Der Minuspol der Fahrzeugbatterie 2 des weiteren Fahrzeugs ist mit dem Fremdenergieversorgungsanschluss 6 des die Starthilfe benötigenden Fahrzeugs verbunden, der Pluspol mit dem Pluspol 3 des die Starthilfe benötigenden Fahrzeugs.

Der Minuspol 4 des die Starthilfe benötigenden Fahrzeugs ist bei dem in der Figur 2 gezeigten Ausführungsbeispiel für eine Fremdenergieversorgung unzugänglich. Dies ist beispielsweise dadurch sichergestellt, dass eine vom Kunden nicht ohne weiteres zu öffnende bzw. abzunehmende Abdeckung 13 auf dem Minuspol 4 angebracht ist, beispielsweise eine Kunststoffkappe. Alternativ dazu kann die Unzugänglichkeit des Minuspols 4 auch dadurch erreicht werden, dass der Einbau der Batterie 1 in das Fahrzeug derart vorgenommen wird, dass der Minuspol 4 für den Kunden unzugänglich ist und dieser folglich nicht die Möglichkeit hat, eine Klemme eines Starthilfekabels am Minuspol 4 der Batterie 1 zu befestigen.

Auch bei diesem Ausführungsbeispiel wird zum Geben und Nehmen von Fremdstart- oder Fremdladehilfe ein definierter Zugang in Form eines Fremdenergieversorgungsanschlusses 6 zur Verfügung gestellt, bei dem es sich nicht um einen der Pole der die Hilfe benötigenden Batterie handelt. Dieser Fremdenergieversorgungsanschluss 6 ist derart angeordnet, dass der vom Fremdenergieversorgungsanschluss 6 in die Batterie fließende Strom mittels der Stromsensorik 5 erfasst wird. Weiterhin ist der Minuspol 4 der Batterie 1 unzugänglich gemacht, um sicher zu stellen, dass der Kunde nicht trotz des Vorhandenseins des Fremdenergieversorgungsanschlusses 6 den Minuspol 4 zur Fremdenergieversorgung nutzt.

Der mit der erfindungsgemäßen Vorrichtung ermittelte Wert für den Batteriestrom i1 wird in bekannter Weise zu einer Fremdstarterkennung verwendet.

Bezugszeichenliste
- 1: Fahrzeugbatterie
- 2: Starthilfebatterie
- 3: Pluspol der Fahrzeugbatterie
- 4: Minuspol der Fahrzeugbatterie
- 5: Stromsensorik
- 6: Fremdenergieversorgungsanschluss
- 7: Fahrzeugmasse
- 8: Starter
- 9: Generator
- 10: Bordnetzverbraucher
- 11: Vorsicherungsbox
- 12: Box
- 13: Abdeckung

## Patentansprüche

1. Vorrichtung zur Erkennung einer Fremdenergieversorgung eines Fahrzeugs, welche Vorrichtung aufweist:
- eine zwischen einem der Pole der Fahrzeugbatterie (1) und dem Bordnetz des Fahrzeugs angeordnete Stromsensorik (5), die zur Erfassung des Batteriestroms vorgesehen ist,
- einen Fremdenergieversorgungsanschluss (6), bei dem es sich nicht um einen der Pole (3, 4) der Fahrzeugbatterie (1) handelt, wobei die Stromsensorik (5) im Signalweg zwischen dem Fremdenergieversorgungsanschluss (6) und demjenigen Pol der Fahrzeugbatterie (1) angeordnet ist, an welchen die Stromsensorik (5) angeschlossen ist, und
- Mittel (13), die denjenigen Pol der Fahrzeugbatterie, an welchen die Stromsensorik angeschlossen ist, für eine Fremdenergieversorgung des Fahrzeugs unzugänglich machen.

2. Vorrichtung nach Anspruch 1, **dadurch gekennzeichnet,dass** die Stromsensorik (5) an den Pluspol (3) der Fahrzeugbatterie (1) angeschlossen ist und die Stromsensorik (5) im Signalweg zwischen dem Fremdenergieversorgungsanschluss (6) und dem Pluspol (3) der Fahrzeugbatterie (1) angeordnet ist.

3. Vorrichtung nach Anspruch 1, **dadurch gekennzeichnet, dass** die Stromsensorik (5) an den Minuspol (4) der Fahrzeugbatterie (1) angeschlossen ist und die Stromsensorik (5) im Signalweg zwischen dem Fremdenergieversorgungsanschluss (6) und dem Minuspol (4) der Fahrzeugbatterie angeordnet ist.

4. Vorrichtung nach einem der vorhergehenden Ansprüche, **dadurch gekennzeichnet, dass** der Fremdenergieversorgungsanschluss (6) in einer Vorsicherungsbox (11) oder in einer Box (12) angeordnet ist.

5. Vorrichtung nach einem der vorhergehenden Ansprüche, **dadurch gekennzeichnet, dass** die Mittel (13), die denjenigen Pol der Fahrzeugbatterie, an welchen die Stromsensorik angeschlossen ist, für eine Fremdenergieversorgung unzugänglich machen, eine Abdeckung sind.

6. Vorrichtung nach einem der vorhergehenden Ansprüche, **dadurch gekennzeichnet, dass** sie eine mit der Stromsensorik verbundene Einheit (11, 12) zum Energiemanagement aufweist.
